# EUROPEAN PATENT APPLICATION

(11) **EP 4 294 065 A1**
(43) Date of publication of application: **20.12.2023**
(21) Application number: 23176780.7
(22) Date of filing: 01.06.2023
(51) Int. Cl.: H04W 12/0431, H04W 12/03, H04W 12/80

(54) **APPLICATION KEY DELIVERY IN A ROAMING SITUATION**

(30) Priority: 17.06.2022 IN 202241034884
(71) Applicant: Nokia Technologies Oy, 02610 Espoo (FI)
(72) Inventor: KHARE, Saurabh, 560043 Bangalore (IN); P NAIR, Suresh, Estero, 33928 (US); MAVUREDDI DHANASEKARAN, Ranganathan, 81737 Munich (DE)
(74) Representative: Nokia EPO representatives

(57) **Abstract**

Various example embodiments relate to authentication in case of roaming. An apparatus may be configured to receive, by an application function of a first visitor public land mobile area network (PLMN) or a second visitor PLMN of a device, a registered serving network identifier of the device indicative of the first visitor PLMN; and transmit, based on the registered serving network identifier, an encryption key to an application security function of the first visitor PLMN for encryption of an application session of the device.

## Description

### TECHNICAL FIELD

Various example embodiments generally relate to the field of communication networks. Some example embodiments relate to authentication in case of roaming in wireless communication networks.

### BACKGROUND

Authentication of user equipment (UE) may be applied in wireless communication networks for example to ensure that access to application servers (AS) is allowed only for authenticated UEs, as verified by associated application providers. Authentication may be based on credentials, such as for example certificates, tokens, usernames, passwords, or the like. Communications between the UE and AS may be encrypted with keys to secure the communications. In case of roaming, the UE may be located at a coverage area of a network that is not the home network of the UE. For example, the UE may be roaming at a visitor public land mobile network (VPLMN) that is different from its home PLMN (HPLMN).

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure improve authentication in a communication network. This and other benefits may be achieved by the features of the independent claims. Further example embodiments are provided in the dependent claims, the description, and the drawings.

According to a first aspect, an apparatus is disclosed. The apparatus may comprise at least one processor; and at least one memory storing instructions that, when executed by the at least one processor, cause the apparatus at least to: transmit, by an authentication server function of a home public land mobile network (PLMN) of a device, an anchor key register request to an application security function of the home PLMN of the device, the anchor key registration request comprising a registered serving network identifier of the device.

According to an example embodiment of the first aspect, the instructions, when executed by the at least one processor, cause the apparatus to: receive an authentication request from a first visitor PLMN of the device, wherein the authentication request comprises an indication of a requirement to use an application encryption key for an application session of the device; and cause forwarding of the indication of the requirement to use the application encryption key for the application session of the device to an application function of the first visitor PLMN or a second visitor PLMN, wherein the application function of the first visitor PLMN or the second visitor PLMN is configured to control encryption of the application session.

According to an example embodiment of the first aspect, the device is served by the first visitor PLMN.

According to an example embodiment of the first aspect, the authentication request further comprises an identifier of the device and/or a name or an identifier of the first visitor PLMN.

According to an example embodiment of the first aspect, the authentication request is received from a security anchor function of the first visitor PLMN.

According to an example embodiment of the first aspect, the instructions, when executed by the at least one processor, cause the apparatus to: forward the indication of the requirement to use the application encryption key for the application session of the device to a user data management function of the home PLMN

According to an example embodiment of the first aspect, the anchor key registration request comprises at least one of: an identifier of the device, an application key identifier, or an application anchor key.

According to an example embodiment of the first aspect, the identifier of the device comprises a subscription permanent identifier, the application key identifier comprises an authentication and key management for applications (AKMA) key identifier, and/or the application anchor key comprises an AKMA anchor key.

According to an example embodiment of the first aspect, the application security function comprises an AKMA anchor function.

According to an example embodiment of the first aspect, the instructions, when executed by the at least one processor, cause the apparatus to: transmit the registered serving network identifier of the device to the application security function based on an indication from a data repository function. According to a second aspect, a method is disclosed. The method may comprise: transmitting, by an authentication server function of a home public land mobile network (PLMN) of a device, an anchor key register request to an application security function of the home PLMN of the device, the anchor key registration request comprising a registered serving network identifier of the device.

According to an example embodiment of the second aspect, the method may comprise: receiving an authentication request from a first visitor PLMN of the device, wherein the authentication request comprises an indication of a requirement to use an application encryption key for an application session of the device; and cause forwarding of the indication of the requirement to use the application encryption key for the application session of the device to an application function of the first visitor PLMN or a second visitor PLMN, wherein the application function of the first visitor PLMN or the second visitor PLMN is configured to control encryption of the application session.

According to an example embodiment of the second aspect, the device is served by the first visitor PLMN.

According to an example embodiment of the second aspect, the authentication request further comprises an identifier of the device and/or a name or an identifier of the first visitor PLMN.

According to an example embodiment of the second aspect, the authentication request is received from a security anchor function of the first visitor PLMN.

According to an example embodiment of the second aspect, the method may comprise: forwarding the indication of the requirement to use the application encryption key for the application session of the device to a user data management function of the home PLMN

According to an example embodiment of the second aspect, the anchor key registration request comprises at least one of: an identifier of the device, an application key identifier, or an application anchor key.

According to an example embodiment of the second aspect, the identifier of the device comprises a subscription permanent identifier, the application key identifier comprises an authentication and key management for applications (AKMA) key identifier, and/or the application anchor key comprises an AKMA anchor key.

According to an example embodiment of the second aspect, the application security function comprises an AKMA anchor function.

According to an example embodiment of the second aspect, the method may comprise: transmitting the registered serving network identifier of the device to the application security function based on an indication from a data repository function.

According to a third aspect, a computer program or a computer program product is disclosed. The computer program or computer program product may comprise instructions for causing an apparatus to perform at least the following: transmitting, by an authentication server function of a home public land mobile network (PLMN) of a device, an anchor key register request to an application security function of the home PLMN of the device, the anchor key registration request comprising a registered serving network identifier of the device. The computer program or the computer program product may comprise instructions for causing an apparatus to perform any example embodiment of the method of the second aspect.

According to a fourth aspect, an apparatus is disclosed. Apparatus may comprise means for transmitting, by an authentication server function of a home public land mobile network (PLMN) of a device, an anchor key register request to an application security function of the home PLMN of the device, the anchor key registration request comprising a registered serving network identifier of the device. The apparatus may comprise means for performing any example embodiment of the method of the second aspect.

According to a fifth aspect, an apparatus is disclosed. The apparatus may comprise: at least one processor; and at least one memory storing instructions that, when executed by the at least one processor, cause the apparatus at least to: receive, by an application security function of a home public land mobile area network (PLMN) of a device, an anchor key register request comprising a registered serving network identifier of the device; and transmit the registered serving network identifier of the device to an application function of a first visitor PLMN or a second visitor PLMN of the device, wherein the device is served by the first visitor PLMN.

According to an example embodiment of the fifth aspect, the anchor key register request comprises an indication of a requirement to use an application encryption key for an application session of the device, and the instructions, when executed by the at least one processor, cause the apparatus to: forward the indication of the requirement to use the application encryption key for the application session of the device to the application function of the first visitor PLMN or the second visitor PLMN, wherein the application function is configured to control encryption of the application session.

According to an example embodiment of the fifth aspect, the registered serving network identifier is transmitted in an application key get response.

According to an example embodiment of the fifth aspect, the registered serving network identifier is indicative of the first visitor PLMN.

According to an example embodiment of the fifth aspect, the anchor key register request is received from an authentication server function of the home PLMN

According to an example embodiment of the fifth aspect, the application security function comprises an AKMA anchor function.

According to an example embodiment of the fifth aspect, the anchor key registration request comprises at least one of: an identifier of the device, an application key identifier, or an application anchor key.

According to an example embodiment of the fifth aspect, the identifier of the device comprises a subscription permanent identifier, the application key identifier comprises an authentication and key management for applications (AKMA) key identifier, and/or the application anchor key comprises an AKMA anchor key.

According to an example embodiment of the fifth aspect, the instructions, when executed by the at least one processor, cause the apparatus to: update an application security context of the device with the registered serving network name of the device.

According to an example embodiment of the fifth aspect, the instructions, when executed by the at least one processor, cause the apparatus to: update the application security context of the device with the identifier of the device, application key identifier, and/or the application anchor key.

According to an example embodiment of the fifth aspect, the application security context comprises an AKMA context.

According to an example embodiment of the fifth aspect, transmission of the anchor key register request to the application function of the first PLMN is via an application security function of the first visitor PLMN, or transmission of the anchor key register request to the application function of the second PLMN is via an application security function of the second visitor PLMN.

According to a sixth aspect, a method is disclosed. The method may comprise: receiving, by an application security function of a home public land mobile area network (PLMN) of a device, an anchor key register request comprising a registered serving network identifier of the device; and transmitting the registered serving network identifier of the device to an application function of a first visitor PLMN or a second visitor PLMN of the device, wherein the device is served by the first visitor PLMN.

According to an example embodiment of the sixth aspect, the anchor key register request comprises an indication of a requirement to use an application encryption key for an application session of the device, and the method further comprises: forwarding the indication of the requirement to use the application encryption key for the application session of the device to the application function of the first visitor PLMN or the second visitor PLMN, wherein the application function is configured to control encryption of the application session.

According to an example embodiment of the sixth aspect, the registered serving network identifier is transmitted in an application key get response.

According to an example embodiment of the sixth aspect, the registered serving network identifier is indicative of the first visitor PLMN.

According to an example embodiment of the sixth aspect, the anchor key register request is received from an authentication server function of the home PLMN

According to an example embodiment of the sixth aspect, the application security function comprises an AKMA anchor function.

According to an example embodiment of the sixth aspect, the anchor key registration request comprises at least one of: an identifier of the device, an application key identifier, or an application anchor key.

According to an example embodiment of the sixth aspect, the identifier of the device comprises a subscription permanent identifier, the application key identifier comprises an authentication and key management for applications (AKMA) key identifier, and/or the application anchor key comprises an AKMA anchor key.

According to an example embodiment of the sixth, the method comprises: updating an application security context of the device with the registered serving network name of the device.

According to an example embodiment of the sixth, the method comprises: updating the application security context of the device with the identifier of the device, application key identifier, and/or the application anchor key.

According to an example embodiment of the sixth aspect, the application security context comprises an AKMA context.

According to an example embodiment of the sixth aspect, transmission of the anchor key register request to the application function of the first PLMN is via an application security function of the first visitor PLMN, or transmission of the anchor key register request to the application function of the second PLMN is via an application security function of the second visitor PLMN.

According to a seventh aspect, a computer program or a computer program product is disclosed. The computer program or computer program product may comprise instructions for causing an apparatus to perform at least the following: receiving, by an application security function of a home public land mobile area network (PLMN) of a device, an anchor key register request comprising a registered serving network identifier of the device; and transmitting the registered serving network identifier of the device to an application function of a first visitor PLMN or a second visitor PLMN of the device, wherein the device is served by the first visitor PLMN. The computer program or the computer program product may comprise instructions for causing an apparatus to perform any example embodiment of the method of the sixth aspect.

According to an eighth aspect, an apparatus is disclosed. Apparatus may comprise means for receiving, by an application security function of a home public land mobile area network (PLMN) of a device, an anchor key register request comprising a registered serving network identifier of the device; and means for transmitting the registered serving network identifier of the device to an application function of a first visitor PLMN or a second visitor PLMN of the device, wherein the device is served by the first visitor PLMN. The apparatus may comprise means for performing any example embodiment of the method of the sixth aspect.

According to a ninth aspect, an apparatus is disclosed. The apparatus may comprise: at least one processor; and at least one memory storing instructions that, when executed by the at least one processor, cause the apparatus at least to: receive, by an application function of a first visitor public land mobile area network (PLMN) or a second visitor PLMN of a device, a registered serving network identifier of the device indicative of the first visitor PLMN; and transmit, based on the registered serving network identifier of the device, an application encryption key to an application security function of the first visitor PLMN for encryption of an application session of the device, determine to continue with integrity protection and not to enable encryption for the application session, if the registered serving network identifier of the device is different from the first visitor PLMN, or reject a request for establishing the application session, if the registered serving network identifier of the device is different from the first visitor PLMN.

According to an example embodiment of the ninth aspect, the instructions, when executed by the at least one processor, further cause the apparatus to: receive an indication of a requirement to use an application encryption key for an application session of the device; and transmit the application encryption key to an application security function of the first visitor PLMN based on the serving network identifier, in response to the requirement to use the application encryption key for the application session of the device.

According to an example embodiment of the ninth aspect, the registered serving network identifier of the device and/or the indication of the requirement to use the application encryption key for the application session of the device is received from an application security function of a home PLMN of the device.

According to an example embodiment of the ninth aspect, the registered serving network identifier of the device and/or the indication of the requirement to use the application encryption key for the application session of the device is received in an application key get response.

According to an example embodiment of the ninth aspect, the apparatus comprises the application function of the first visitor PLMN of the device, and the application encryption key is transmitted to the application security function of the first visitor PLMN.

According to an example embodiment of the ninth aspect, the apparatus comprises the application function of the second visitor PLMN of the device, and the application encryption key is transmitted to the application security function of the first visitor PLMN.

According to an example embodiment of the ninth aspect, the application security function of the first visitor PLMN or the application security function of the home PLMN comprises an authentication and key management for applications (AKMA) anchor function.

According to a tenth aspect, a method is disclosed. The method may comprise: receiving, by an application function of a first visitor public land mobile area network (PLMN) or a second visitor PLMN of a device, a registered serving network identifier of the device indicative of the first visitor PLMN; and transmitting, based on the registered serving network identifier of the device, an application encryption key to an application security function of the first visitor PLMN for encryption of an application session of the device, determining to continue with integrity protection and not to enable encryption for the application session, if the registered serving network identifier of the device is different from the first visitor PLMN, or rejecting a request for establishing the application session, if the registered serving network identifier of the device is different from the first visitor PLMN.

According to an example embodiment of the tenth aspect, the method may comprise: receiving an indication of a requirement to use an application encryption key for an application session of the device; and transmitting the application encryption key to an application security function of the first visitor PLMN based on the serving network identifier, in response to the requirement to use the application encryption key for the application session of the device.

According to an example embodiment of the tenth aspect, the registered serving network identifier of the device and/or the indication of the requirement to use the application encryption key for the application session of the device is received from an application security function of a home PLMN of the device.

According to an example embodiment of the tenth aspect, the registered serving network identifier of the device and/or the indication of the requirement to use the application encryption key for the application session of the device is received in an application key get response.

According to an example embodiment of the tenth aspect, the method is performed by the application function of the first visitor PLMN of the device, and the application encryption key is transmitted to the application security function of the first visitor PLMN.

According to an example embodiment of the tenth aspect, the method is performed by the application function of the second visitor PLMN of the device, and the application encryption key is transmitted to the application security function of the first visitor PLMN.

According to an example embodiment of the tenth aspect, the application security function of the first visitor PLMN or the application security function of the home PLMN comprises an authentication and key management for applications (AKMA) anchor function.

According to an eleventh aspect, a computer program or a computer program product is disclosed. The computer program or the computer program product may comprise instructions for causing an apparatus to perform at least the following: receiving, by an application function of a first visitor public land mobile area network (PLMN) or a second visitor PLMN of a device, a registered serving network identifier of the device indicative of the first visitor PLMN; and transmitting, based on the registered serving network identifier of the device, an application encryption key to an application security function of the first visitor PLMN for encryption of an application session of the device, determining to continue with integrity protection and not to enable encryption for the application session, if the registered serving network identifier of the device is different from the first visitor PLMN, or rejecting a request for establishing the application session, if the registered serving network identifier of the device is different from the first visitor PLMN. The computer program or the computer program product may comprise instructions for causing an apparatus to perform any example embodiment of the method of the tenth aspect.

According to a twelfth aspect, an apparatus is disclosed. Apparatus may comprise means for receiving, by an application function of a first visitor public land mobile area network (PLMN) or a second visitor PLMN of a device, a registered serving network identifier of the device indicative of the first visitor PLMN; and means for transmitting, based on the registered serving network identifier of the device, an application encryption key to an application security function of the first visitor PLMN for encryption of an application session of the device, means for determining to continue with integrity protection and not to enable encryption for the application session, if the registered serving network identifier of the device is different from the first visitor PLMN, or means for rejecting a request for establishing the application session, if the registered serving network identifier of the device is different from the first visitor PLMN. The apparatus may comprise means for performing any example embodiment of the method of the tenth aspect.

According to a thirteenth aspect, an apparatus is disclosed. The apparatus may comprise: at least one processor; and at least one memory storing instructions that, when executed by the at least one processor, cause the apparatus at least to: receive, by an user data management function of a home public land mobile network (PLMN) a device, a registration request for the device, the registration request comprising an indication of whether use of an application encryption key is required for an application session of the device, wherein the registration request is received from an access and mobility management function of a visitor public land mobile network (PLMN) of the device; and transmit the indication of whether use of the application encryption key is required for the application session of the device to an authentication server function of the home network, in response to determining that the visitor PLMN is not associated with a serving network identifier currently stored for the device and/or in response to determining that a value of the indication of whether use of the application encryption key is required for the application session of the device is different from a previous value of the indication of whether use of the application encryption key is required for the application session of the device.

According to a fourteenth aspect, a method is disclosed. The method may comprise: receiving, by an user data management function of a home public land mobile network (PLMN) a device, a registration request for the device, the registration request comprising an indication of whether use of an application encryption key is required for an application session of the device, wherein the registration request is received from an access and mobility management function of a visitor public land mobile network (PLMN) of the device; and transmitting the indication of whether use of the application encryption key is required for the application session of the device to an authentication server function of the home network, in response to determining that the visitor PLMN is not associated with a serving network identifier currently stored for the device and/or in response to determining that a value of the indication of whether use of the application encryption key is required for the application session of the device is different from a previous value of the indication of whether use of the application encryption key is required for the application session of the device.

According to a fifteenth aspect, a computer program or a computer program product is disclosed. The computer program or the computer program product may comprise instructions for causing an apparatus to perform at least the following: receiving, by an user data management function of a home public land mobile network (PLMN) a device, a registration request for the device, the registration request comprising an indication of whether use of an application encryption key is required for an application session of the device, wherein the registration request is received from an access and mobility management function of a visitor public land mobile network (PLMN) of the device; and transmitting the indication of whether use of the application encryption key is required for the application session of the device to an authentication server function of the home network, in response to determining that the visitor PLMN is not associated with a serving network identifier currently stored for the device and/or in response to determining that a value of the indication of whether use of the application encryption key is required for the application session of the device is different from a previous value of the indication of whether use of the application encryption key is required for the application session of the device.

According to a sixteenth aspect, an apparatus is disclosed. Apparatus may comprise means for receiving, by an user data management function of a home public land mobile network (PLMN) a device, a registration request for the device, the registration request comprising an indication of whether use of an application encryption key is required for an application session of the device, wherein the registration request is received from an access and mobility management function of a visitor public land mobile network (PLMN) of the device; and means for transmitting the indication of whether use of the application encryption key is required for the application session of the device to an authentication server function of the home network, in response to determining that the visitor PLMN is not associated with a serving network identifier currently stored for the device and/or in response to determining that a value of the indication of whether use of the application encryption key is required for the application session of the device is different from a previous value of the indication of whether use of the application encryption key is required for the application session of the device.

According to a seventeenth aspect, an apparatus is disclosed. The apparatus may comprise: at least one processor; and at least one memory including computer program code; the at least one memory and the computer program code configured to, with the at least one processor, cause the apparatus at least to: receive, by an application security function of a first visitor public land mobile network, PLMN, of a device, an application encryption key for encryption of an application session of the device, wherein the application encryption key is received from an application function of the first visitor PLMN or a second visitor PLMN; and store the application encryption key.

According to an example embodiment of the seventeenth aspect, the apparatus may be configured to: provide the application encryption key, upon a request, for interception of the application session.

According to an eighteenth aspect, a method is disclosed. The method may comprise: receiving, by an application security function of a first visitor public land mobile network, PLMN, of a device, an application encryption key for encryption of an application session of the device, wherein the application encryption key is received from an application function of the first visitor PLMN or a second visitor PLMN; and storing the application encryption key.

According to an example embodiment of the eighteenth aspect, the method may comprise: providing the application encryption key, upon a request, for interception of the application session.

According to an nineteenth aspect, a computer program or a computer program product is disclosed. The computer program or the computer program product may comprise instructions for causing an apparatus to perform at least the following: receiving, by an application security function of a first visitor public land mobile network, PLMN, of a device, an application encryption key for encryption of an application session of the device, wherein the application encryption key is received from an application function of the first visitor PLMN or a second visitor PLMN; and storing the application encryption key. The computer program or the computer program product may comprise instructions for causing an apparatus to perform any example embodiment of the method of the eighteenth aspect.

According to a twentieth aspect, an apparatus is disclosed. Apparatus may comprise: means for receiving, by an application security function of a first visitor public land mobile network, PLMN, of a device, an application encryption key for encryption of an application session of the device, wherein the application encryption key is received from an application function of the first visitor PLMN or a second visitor PLMN; and means for storing the application encryption key. The apparatus may comprise means for performing any example embodiment of the method of the eighteenth aspect.

Example embodiments of the present disclosure can thus provide devices, methods, and computer programs for improving authentication and key management in a communication network. Any example embodiment may be combined with one or more other example embodiments. These and other aspects of the present disclosure will be apparent from the example embodiment(s) described below. Computer program(s) may be stored on a (non-transitory) computer readable medium, for example as program instructions stored thereon for performing, or causing performance by an apparatus of, any example embodiment of the method(s) disclosed herein.

### DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a communication network;
FIG. 2 illustrates an example of an apparatus configured to practice one or more example embodiments;
FIG. 3A and 3B illustrate an example of a message sequence and operations for authentication when a UE is connected to a first VPLMN and initiates access to an application function of a second VPLMN;
FIG. 4A and 4B illustrate an example of a message sequence and operations for authentication when a UE is connected to a VPLMN and initiates access to an application function of the same VPLMN;
FIG. 5 illustrates an example of a message sequence and operations for authentication with support for lawful interception, when a UE is connected to a VPLMN and initiates access to an application function of the same VPLMN;
FIG.6 illustrates an example of a method for authentication and key management at a home network;
FIG.7 illustrates another example of a method for authentication and key management at a home network;
FIG.8 illustrates another example of a method for authentication and key management at a visitor network;
FIG. 9 illustrates another example of a method for authentication and key management at a home network; and
FIG. 10 illustrates another example of a method for authentication and key management at a visitor network.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

A communication network may apply security features and mechanisms, for example to support authentication and key management for applications (AKMA). This may be for example based on subscription credential(s) associated with user equipment (UE). For example, in case of the 5G system (5GS) as defined by the 3^{rd} Generation Partnership Project (3GPP), AKMA may be based on 5G access credentials. AKMA may be used for protecting communications between a UE and an application function (AF), for example in the scenarios of proximity services (ProSe), MSGin5G (messaging in 5GS, e.g. form massive internet of things (MIoT)), or the like. However, in order to enable smooth AKMA functionality, roaming aspects may be considered, for example in terms of security issues, regulatory requirements, lawful interception (LI), or the like. Roaming may refer to a situation, where a UE is connected to a network that is not a home network of the UE. For example, the UE may be roaming at a visitor public land mobile network (VPLMN) that is different from its home PLMN (HPLMN). The HPLMN may store various subscription and authentication related information of the UE. Such information may not be available at the VPLMN, if not retrieved from the HPLMN.

Another aspect to consider is introduction of an authentication proxy (AP) in AKMA. For example, in case of generic a bootstrapping architecture (GBA), an authentication proxy (AP) may reside between the UE and application server (AS). This enables to reduce consumption of authentication vectors and/or to reduce/minimize sequence number (SQN) synchronization failures. This may also relieve the AS from at least some of its security-related tasks. This may be beneficial for example when different application servers, or application functions in case of AKMA, reside in the same trust domain or in the same edge node. When using an application proxy, the application servers may rely on the authentication proxy to execute AKMA procedures. This may be more cost efficient than executing AKMA procedures separately by each application server. AKMA may be used for example in case of multi-access edge computing. It is therefore possible that different application servers reside in the same edge cloud or belong to the same service vendor. It may be therefore beneficial to consider feasibility of introducing a similar proxy server in AKMA.

Example embodiments of the present disclosure may be applied for example in the following scenarios:
- UE is in a first VPLMN, trying to access an application function (AF) of its HPLMN,
- UE is roaming in a first VPLMN, trying to access an AF of the first VPLMN,
- UE is roaming in a first VPLMN, trying to access an AF of a second VPLM, or
- UE is at its HPLMN, trying to access an AF of a first VPLMN.

Procedures may be defined to support these scenarios, while addressing also the lawful interception (LI) requirements, which may be associated with encryption. For example, communications using the UA* interface protocol may be encrypted via keys derived from an AKMA application key (K_{AF}). Derivation of encryption keys from K_{AF} may be defined by an application layer protocol. It may be therefore desired that the lawful interception procedures are compliant with the application function (AF).

Example embodiments of the present disclosure may address they following issues:
- How does an AF know the LI requirements of the relevant VPLMN (e.g. whether LI is supported or not)? The relevant VPLMN may be the VPLMN, to which the UE is currently attached.
- How to enable provision of encryption keys to the relevant VPLMN, for example to meet the LI requirement?
- How to inform the AF of the LI requirements of the relevant VPLMN?
- How to enable the AF to deliver the encryption keys from the AF to the relevant VPLMN?
- How to enable the AF to retrieve the encryption keys from the HPLMN ?

Example embodiments of the present disclosure enable communication networks to support of AKMA roaming by providing and AKMA roaming architecture, while meeting lawful interception requirements. A flag (AKMA_ENC_KEY_REQUIRED) may be provided for indicating to a HPLMN that a VPLMN requires an encryption key for at least one application. This indication may be provided from a VPLMN to the HPLMN, which may cause delivery of the requested encryption key to the requesting VPLMN or another VPLMN.

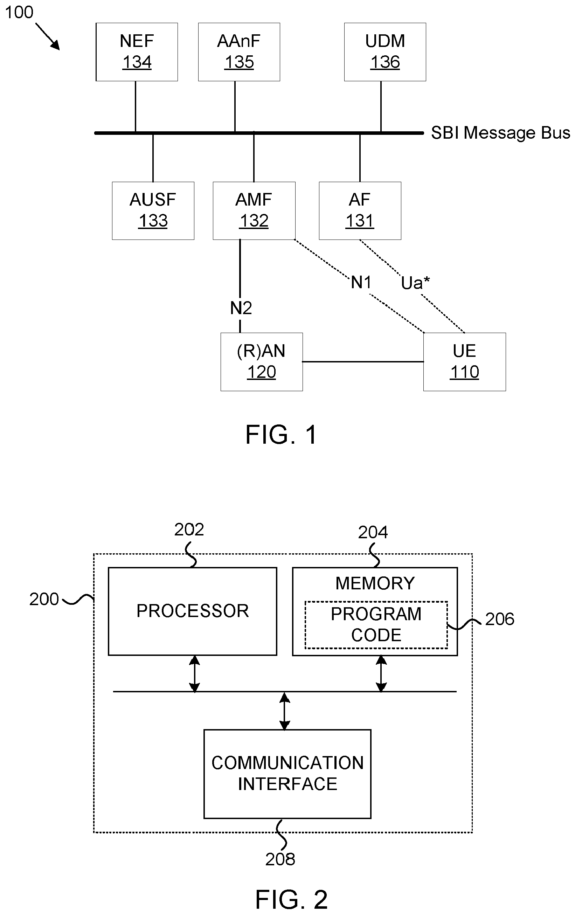

FIG. 1 illustrates an example of a communication network. A UE 110 may access application services via radio access network (RAN) 120. RAN 120 may comprise one or more access nodes (AN), for example, 5G access nodes (gNB). UE 110 may communicate with the access nodes over a radio interface, configured for example based on the 3GPP 5G NR (New Radio). A core network of communication network 100 may be implemented with various network functions, including for example one or more of network functions 131 to 136, communicating for example over the service based interface (SBI) bus. Communication network 100 may comprise other network function(s), in addition, or alternative to, the network functions illustrated in FIG. 1. Even though some embodiments have been described in the context of 5G, it is appreciated that embodiments of the present disclosure are not limited to this example network. Example embodiments may be therefore applied in any present or future communication networks. An apparatus may comprise, or be configured to implement, e.g. by means of software, one or more of the network functions described herein.

An application function (AF) 131 may enable external applications to control operation of other network functions. For example, application function 131 may affect traffic routing or policy control for communication sessions associated with one or more applications. AF 131 may further enable, with AKMA services, requests for an AKMA application key (K_{AF}) from an AKMA anchor function (AAnF) 135 using an AKMA key identifier (A-KID). AF 131 may be authenticated and authorized by the associated operator network before provision of the K_{AF} to AF 131.

Access and mobility management function (AMF) 132 may receive connection and session request related data from UE 110 (via an access node of the RAN 120), for example, over the N1 and N2 interfaces. AMF 131 may control connection and mobility management in communication network 100.

Authentication server function (AUSF) 133 may be configured to support authentication, for example for 3GPP access and/or untrusted non-3GPP access. In case of AKMA, AUSF 133 may provide a subscription identifier, e.g. subscription permanent identifier (SUPI) and AKMA key material (e.g. A-KID, K_{AKMA}) of UE 110 to AAnF 135. AUSF 133 may be further configured to perform AAnF selection. It is noted that even if SUPI is used as an example of an identifier or a permanent identifier of a UE 110, other identifier(s) may be used instead of SUPI for the same purpose.

Network exposure function (NEF) 134 may be configured with at least one of the following functionalities:
- Exposure of capabilities and events: Network function capabilities and events may be securely exposed by NEF 134, for example for 3rd parties, application functions, or edge computing. NEF 134 may store/retrieve information as structured data to/from a unified data repository (UDR) of communication network 100.
- Secure provision of information from external application to 3GPP network: NEF 134 may provide means for AF 131 to securely provide information to 3GPP network, for example about expected UE behaviour, 5G-virtual network group information, time synchronization service information, or service specific information. NEF 134 may for example authenticate and authorize and assist in throttling AF 131.

NEF 134 may be configured to enable and authorize an external AF to access an AKMA service. NEF 134 may be configured to forward related requests towards AAnF 135. NEF 134 may be further configured to perform AAnF selection.

AAnF 135 may operate as an anchor function in the HPLMN. AAnF 135 may store the AKMA anchor key (K_{AKMA}) and SUPI for an AKMA service. The SUPI may be received from AUSF 133, for example after UE 110 has completed a successful 5G primary authentication. AAnF 135 may generate the key material to be used in communications between UE 110 and an application function (e.g. AF 131). AAnF 135 may maintain AKMA context(s) of UE 110. AAnF 135 may send SUPI of UE 135 to AF 131, when AF 131 is located inside the operator's network or NEF 134.

User data management (UDM) function 136 may be configured to support one or more of the following functionalities:
- generation of 3GPP AKA (authentication and key agreement) authentication credentials,
- user identification handling (e.g. storage and management of SUPI for each subscriber in the 5G system),
- support of de-concealment of privacy-protected subscription identifier (SUCI),
- access authorization based on subscription data (e.g. roaming restrictions),
- UE's serving network function registration management (e.g. storing serving AMF 131 for UE 110, storing serving session management function (SMF) for UE's data session,
- support to service/session continuity e.g. by keeping SMF/DNN (data domain name) assignment of ongoing sessions,
- mobile-terminating (MT) SMS (short message system) delivery support,
- lawful interception (LI) functionality (e.g. in outbound roaming case where UDM 136 is the only point of contact for LI),
- subscription management,
- SMS management,
- 5G virtual network group management handling,
- support of external parameter provisioning (e.g. expected UE behaviour parameters or network configuration parameters), or
- support for disaster roaming.
To provide this functionality, the UDM 136 may use subscription data (e.g. authentication data) that may be stored in UDR. UDM stores AKMA subscription data of the subscriber. UDM 136 may store AKMA subscription data of subscriber(s). A serving network of UE 110 may provide data transfer services for UE 110 at the radio interface. UE 110 may communicate data through RAN 120 of the serving network (e.g. even if established an application session with an application function of another network).

Communication network 100 may comprise a security anchor function (SEAF), which may be located in a serving network, to which UE 110 may be connected/registered. During the authentication process, the SEAF may operate as a relay between UE 110 and its home network (HPLMN). The SEAF may be allowed to reject authentication of UE 110, but SEAF may rely on the HPLMN of UE 110 to accept authentication of UE 110.

In accordance with illustrative example embodiments described in context of 5GS environment, one or more 3GPP technical specifications (TS) and technical reports (TR) may provide further explanation of network elements/functions and/or operations that may interact with parts of the solutions described herein. However, while well-suited for 5G-related 3GPP standards, embodiments are not necessarily intended to be limited to any particular standards.

FIG. 2 illustrates an example of a apparatus 200 configured to practice one or more embodiments. Apparatus 200 may comprise a network device implementing one or more network functions, or in general a device configured to implement functionality described herein. Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The memory 204 may be configured to store, for example, computer program code or the like, for example operating system software and application software. The memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 204 is provided as an example of a (non-transitory) computer readable medium.

Apparatus 200 may further comprise a communication interface 208 configured to enable apparatus 200 to transmit and/or receive information. The communication interface 208 may comprise an internal communication interface such as for example an interface (e.g. SBI) between different network functions of the apparatus 200. Apparatus 200 may further comprise other components and/or functions such as for example a user interface (not shown) comprising at least one input device and/or at least one output device. The input device may take various forms such a keyboard, a touch screen, or one or more embedded control buttons. The output device may for example comprise a display, a speaker, or the like.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 200 may be configured to perform method(s) described herein or comprise means for performing method(s) described herein. In one example, the means comprises the at least one processor 202, the at least one memory 204 including program code 206 configured to, when executed by the at least one processor 202, cause apparatus 200 to perform the method(s).

Apparatus 200 may comprise, for example, a network device, for example, a server, a base station, or the like. Although apparatus 200 is illustrated as a single device, it is appreciated that, wherever applicable, functions of apparatus 200 may be distributed to a plurality of devices.

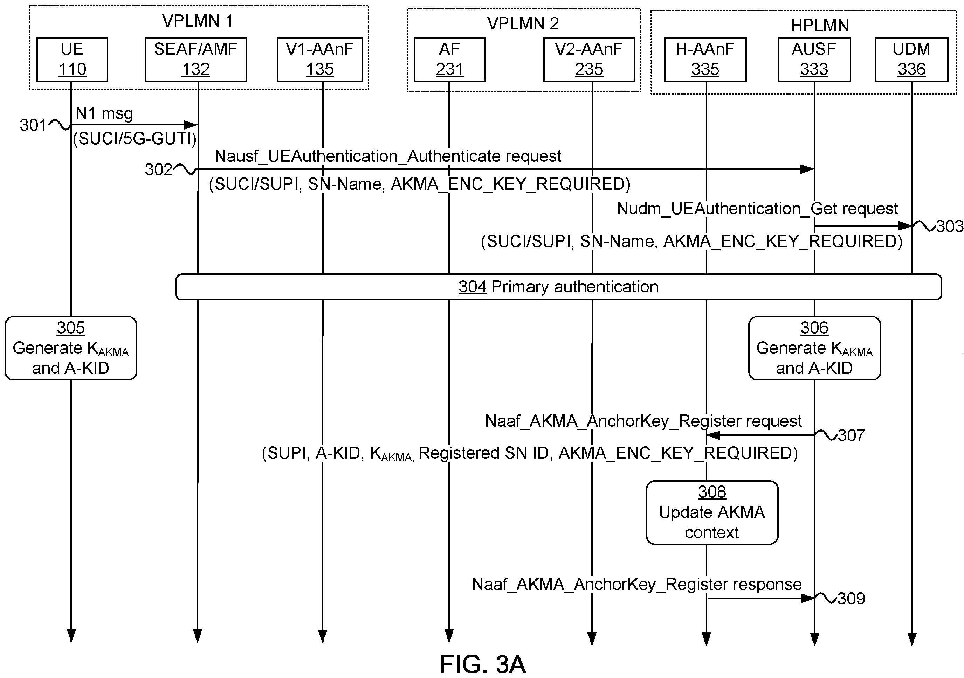

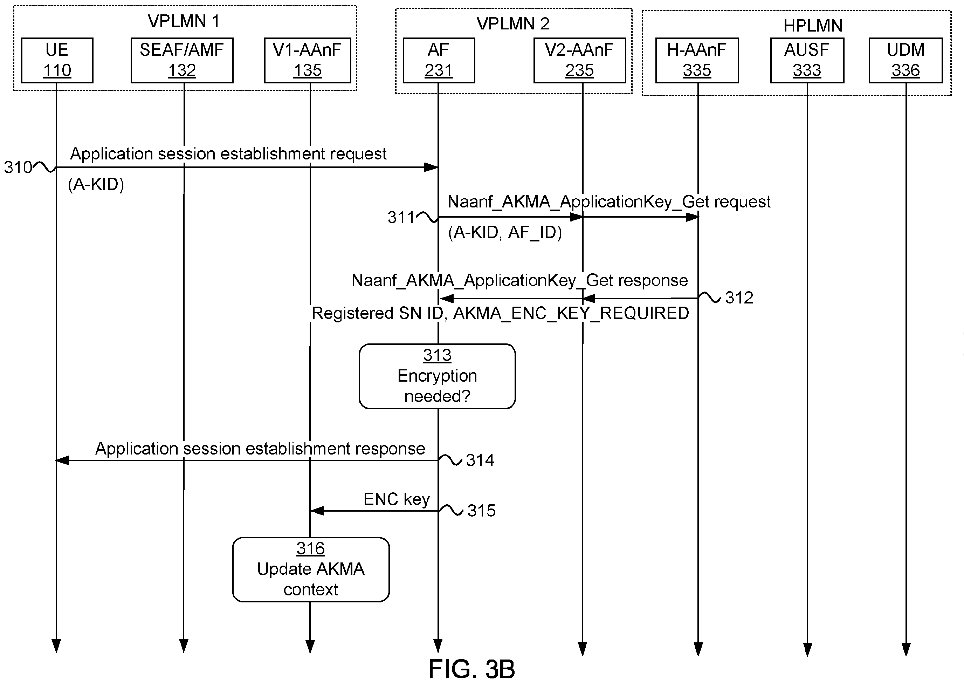

FIG. 3A and 3B illustrate an example of a message sequence and operations for authentication when a UE is connected to a first VPLMN (VPLMN 1) and initiates access to an application function of a second VPLMN (VPLMN 2). VPLMN 1 may comprise SEAF/AMF 132 and an AAnF 135 (V1-AAnF). VPLMN 2 may comprise AF 231 and AAnF 235 (V2-AAnF). HPLMN may comprise AAnF 335 (H-AAnF), AUSF 333, and UDM 336. SEAF/AMF 132 may initiate authentication of UE 110 during any procedure establishing a singaling connection with UE 110. Even though illustrated to be performed by particular network functions, it is appreciated that similar functionality may be realized with any suitable network function(s), or device(s), of VPLMN 1, VPLMN 2, or HPLMN.

At operation 301, UE 110, which may be connected/registered to VPLMN 1, may transmit an N1 message (msg), e.g. a registration request, to SEAF/AMF 132. The N1 message may comprise an identifier of UE 110, for example SUCI (subscription concealed identifier) or 5G-GUTI (global unique temporary identifier). SUCI may comprise a privacy preserving identifier containing a concealed SUPI. 5G-GUTI may be allocated by AMF 131 and be used as a core network temporary identifier.

At operation 302, SEAF/AMF 132 may transmit an authentication request to the HPLMN, for example AUSF 333. SEAF/AMF 132 may for example invoke an Nausf_UEAuthentication service by sending an Nausf_UEAuthentication_Authenticate request. The authentication request may comprise at least one of: SUCI, SUPI, serving network (SN) name or identifier, or an indication of whether an application encryption key is required (represented throughout the description by flag AKMA_ENC_KEY_REQUIRED). The authentication request may be transmitted as a single request message or a combination of messages. Alternatively, AUSF 333 may receive the AKMA_ENC_KEY_REQUIRED flag from a data repository function (e.g. UDM 336 or a unified data repository, UDR) of the home PLMN.

At operation 303, AUSF 333 may transmit an authentication request to UDM 336 (e.g. as an Nudm_UEAuthentication_Get request). This authentication request may comprise similar information as received from VPLMN 1 at operation 302. Based on SUPI, optionally obtained by de-concealment of SUCI, UDM 336 may select the method of authentication.

At operation 304, primary authentication may be performed for UE 110. The primary authentication may comprise one or more of the following sub-operations:
- UDM 336 may generate an authentication vector (AV). UDM 336 may determine a transformed authentication vector comprising transformed ciphering key (CK') and transformed integrity key (IK').
- UDM 336 may send the transformed authentication vector to AUSF 333.
- AUSF 333 may transmit an authentication response (e.g. Nausf_UEAuthentication_Authenticate response) to SEAF/AMF 132. The authentication response may comprise an EAP (extensible authentication protocol) request or AKA' challenge.
- SEAF/AMF 132 may forward the EAP-Request or AKA' challenge message to UE 110, for example in a non access stratum (NAS) message. This message may further comprise a (5G) key set identifier (e.g. ngKSI) and/or anti-bidding down between architectures (ABBA) parameter(s), which may be used for deriving key K_{AMF} by UE 110.
- UE 110 may calculate authentication response and send it to SEAF/AMF 132. UE 110 may for example send an EAP-response or AKA' challenge message to the SEAF/AMF 132 in a NAS message Auth-Resp.
- SEAF/AMF 132 may forward the information received from UE 110 (EAP-response or AKA' challenge message) to AUSF 333, for example in an Nausf_UEAuthentication_Authenticate Request message.
- AUSF 333 may verify the response, and if successful, the procedure may be continued as follows:
   - AUSF 333 and UE 110 may exchange EAP-Request/AKA'-Notification and EAP-Response /AKA'-Notification messages via SEAF/AMF 132. SEAF/AMF 132 may transparently forward these messages.
   - AUSF 333 may derive a session key (e.g. an extended master session key, EMSK). The session key may be derived based on CK' and IK'. AUSF 333 may for example use the most significant 256 bits of the session key (e.g. EMSK) as an intermediate key K_{AUSF}, which may be established between UE 110 as a result of the primary synchronization procedure. AUSF 333 may calculate an anchor key K_{SEAF} from K_{AUSF}. AUSF 333 may transmit an indication of K_{SEAF} to SEAF/AMF 132.
   - Within SEAF/AMF 132, the SEAF may derive key K_{AMF} from K_{SEAF}, the ABBA parameter, and the SUPI and provide this to the AMF.
   - SEAF/AMF 132 may transmit an indication of the anchor key K_{SEAF} to UE 110, for example in an N1 message.

At operation 305, UE 110 may generate an AKMA anchor key K_{AKMA} and A-KID. K_{AKMA} is used throughout the application as an example of an application anchor key. A-KID is used throughout the application as an example of an application key identifier. K_{AKMA} and A-KID may be derived from K_{AUSF}. UE 110 may perform this before initiating communication with an AKMA application function.

At operation 306, AUSF 333 may generate an AKMA anchor key K_{AKMA} and A-KID, similar to UE 110. AUSF 333 may do this in response to completion of the primary authentication process.

At operation 307, AUSF 333 may transmit an indication of SUPI, A-KID, K_{AKMA}, registered SN ID, SN name, and/or AKMA_ENC_KEY_REQUIRED flag to H-AAnF 335, for example in an Naaf_AKMA_AnchorKey_Register request. Registered SN ID may indicate SN ID to which UE 110 is currently registered, e.g. VPLMN 1. This information may be transmitted based on, or in response to, an indication received from a data repository function.

At operation 308, H-AAnF 335 may update the AKMA context of UE 110 with the received information, for example the AKMA_ENC_KEY_REQUIRED flag and/or the received registered SN ID

At operation 309, H-AAnF 335 may respond back to AUSF 333, for example with an Naanf_AKMA_AnchorKey_Register response. The procedure may continue as illustrated in FIG. 3B.

At operation 310, AF 231 of VPLMN 2 may receive an application session establishment request from UE 110. The application session establishment request may comprise the A-KID.

At operation 311, AF 231 may forward the A-KID received from UE 110 to the HPLMN, for example along with its the application function identifier (AF_ID). This information may be provided to H-AAnF 335, for example within an application key get request (e.g. Naanf_AKMA_ApplicationKey_Get request). Forwarding the A-KID and/or AF_ID may be via V2-AAnF 235.

For example, UE 110 may request an application session establishment request with A-KID towards AF 231 in VPLMN 2 . AF 231 may check the home network identifier available in the realm part of the A-KID and determine based on the home network identifier that this is a roaming case. Therefore, AF 231 may discover the local H-AAnF 235 and send the Naanf_AKMA _ApplicationKey_Get request with A-KID and AF_ID to this local AAnF. If AF 231 is not in the operator domain, then AF 231 may request the AAnF via NEF. H-AAnF 335 may check the realm of A-KID and recognize that it is a roaming case. H-AAnF 335 may discover the H-AAnF 335 based on the home network identifier available in the realm of A-KID and forward the request to the H-AAnF 335 with A-KID and AF_ID.

At operation 312, the HPLMN (e.g. H-AAnF 335) may transmit a response, for example an application key get response (e.g. Naanf_AKMA_ApplicationKey_Get response). The response may comprise registered serving network ID(s) (SN ID), and/or the AKMA_ENC_KEY_REQUIRED flag. If there are two registered SN IDs available in AUSF 333 or H-AAnF 335, for example when UE 110 is attached via 3GPP access in VPLMN 1 and non-3GPP access in VPLMN 2, then both registered SN IDs may be provided AF 231.

For example, H-AAnF 335 may respond with an application key get response (e.g. Naanf_AKMA_ApplicationKey_Get response) containing registered SN ID. V2-AAnF may forward this response to AF 231.

At operation 313, AF 231 may determine whether encryption is needed for an application session. For example, if AKMA _ENC_KEY_REQUIRED flag is set, AF 231 may determine that encryption is needed for the data. If AKMA_ENC_KEY_REQUIRED flag is not set, AF 231 may determine that encryption is not needed. Furthermore, if the registered SN ID included in the response of operation 312 is different from SN ID of VPLMN 2 (e.g. SN ID of VPLMN 1 as in this example), AF 231 may determine that, for example in case encryption is required by AKMA_ENC_KEY_REQUIRED flag, the application encryption key (K_{AF}) is to be delivered to the identifier serving network (VPLMN 1). However, if encryption is not needed, AF 231 may determine not to provide an application encryption key to VPLMN 2, thereby resulting in providing no encryption for the application data.

As another example, which may or may not be combined with use of the AKMA_ENC_KEY_REQUIRED flag, operation 313 may be partially performed by V2-AAnF 235. If the registered SN ID is different from the PLMN in which AF 231 is located/connected, AF 231 may decide:
- to support pushing (or push) encryption keys to VPLMN 1 (V2AAnF may discover the V1-AAnF 135 based on the registered SN ID and provide the encryption keys to VPLMN 1. V1-AAnF 135 may store the encryption keys related to UE 110, which may be used by LI if required,
- not to enable the encryption and continue with the UE session with integrity protection, or
- not to provide the service to UE 110 attached to other PLMN and reject the request.

Presence and use of AKMA_ENC_KEY_REQUIRED flag may be however optional and AF 231 may determine to provide encryption key(s) to the relevant AAnF based on the registered SN ID.

At operation, 314 AF 231 may transmit an application session establishment response, for example to indicate successful establishment of the application session requested at operation 310. Alternatively, may reject the application session establishment request and transmit an indication of the rejection to UE 110.

At 315, AF 231 may provide the application encryption key (ENC key, derived from K_{AF}) to AAnF 135 of VPLMN 1 (V1-AAnF). Key hierarchy may be as follows: K_{AKMA} may be derived by based on K_{AUSF}. K_{AF} may be derived based on K_{AUSF}. K_{AKMA} and A-KID may be valid until a next successful primary authentication is performed, which may trigger replacement of K_{AKMA} and A-KID. AKMA application key(s) K_{AF} may be configured with a certain lifetime, for example based on operator's policy. Lifetime of K_{AF} may be indicated by H-AAnF 335 to any network function. If a new K_{AKMA} is established, K_{AF} may continue to be used for the duration of the current application session or until its lifetime expires, whichever comes first. When the K_{AF} lifetime expires, a new K_{AKMA} may be established based on the current K_{AKMA}.

At operation 316, V1-AAnF 135 may update the AKMA context based on the application encryption key (ENC key) received at operation 315. V1-AAnF 135 may for example store the received ENC key. Application data may be subsequently encrypted with this key. Upon a request, V1-AAnF 135 may provide the stored application encryption key (e.g. to another device), for example for intercepting the application session (e.g. in case of lawful interception). Intercepting the application session may comprise decrypting data of the application session based on the provided application encryption key.

Therefore, as the registered SN ID received by AF 231 at operation 312 is different from VPLMN 2 (in which AF 231 is located) and UE 110 registered to VPLMN 1, encryption key(s) may be sent to V1-AAnF 135 from AF 231. V1-AAnF 135 in VPLMN 1 updates the AKMA context with the received encryption key(s). To discover V1-AAnF 135, AF 231 may extract the SN Name(s) received in operation 312 and use a network repository function (NRF) to discover V1-AAnF 135. AF 231 may then push the encryption key(s) to V1-AAnF 135. If AF 231 can not send the encryption key(s) to VPLMN 1, AF 231 may determine to terminate the encryption and provide integrity protection, for example over Ua* interface. Alternatively, AF 231 may determine not to provide the application service to UE 110. AF 231 may for example send an error code "services are not allowed from serving network" to UE 110.

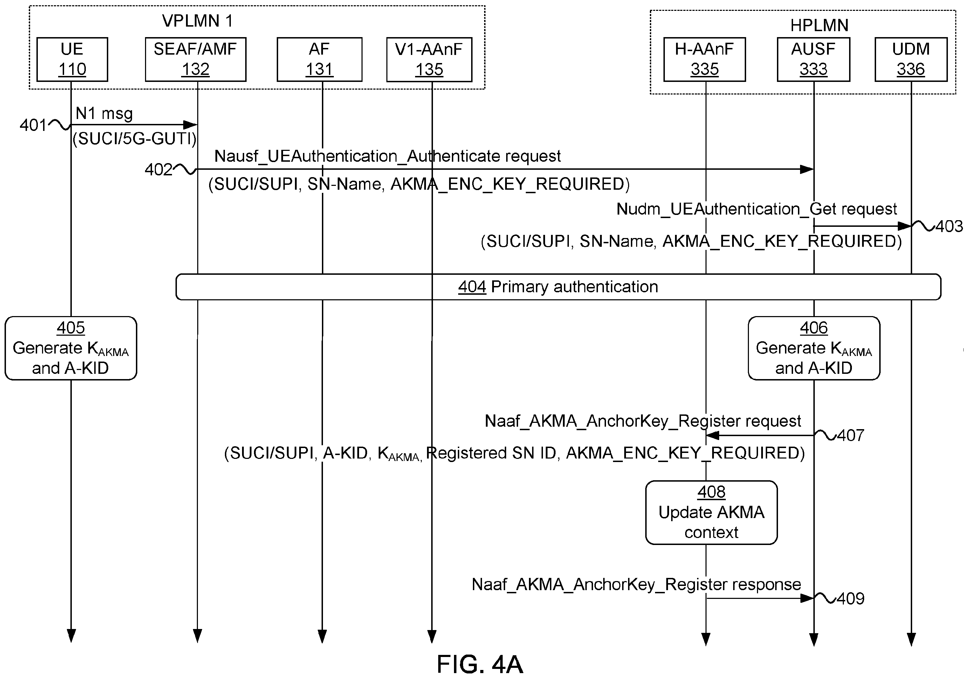

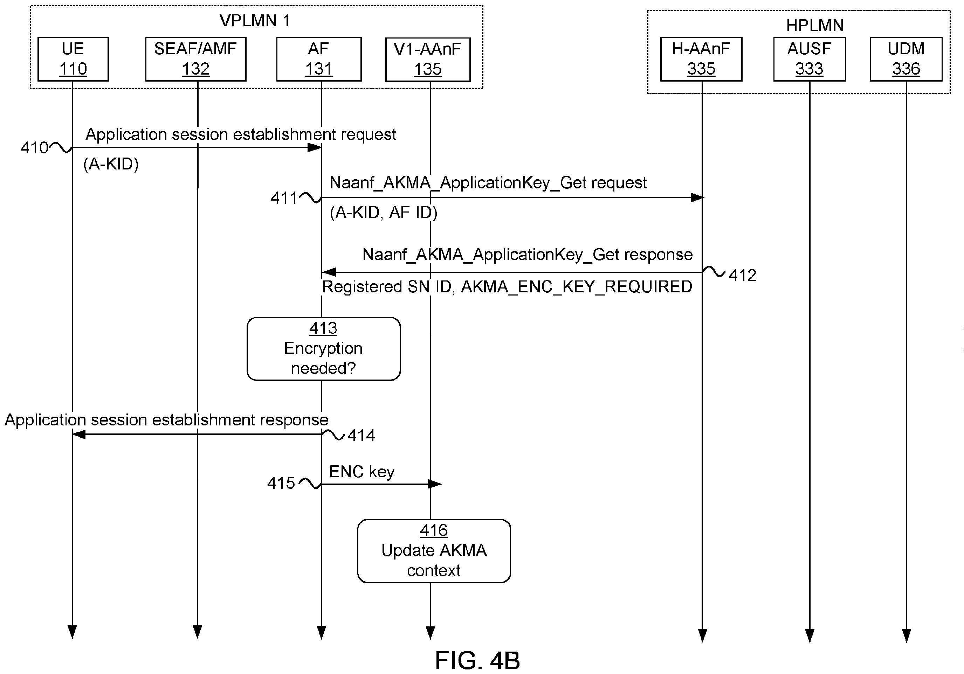

FIG. 4A and 4B illustrate an example of a message sequence and operations for authentication when a UE is connected to a VPLMN and initiates access to an application function of the same VPLMN.

Operations 401 to 409 may be similar to operations 301 to 309, respectively.

At operation, UE 110 may transmit an application session establishment request, similar to operation 310. This request may be however sent to AF 131, which may be located at VPLMN 1, to which UE 110 may be currently registered.

At operation 411, AF 131 may forward the A-KID received from UE 110 to the HPLMN, optionally along with its AF_ID, similar to operation 311. Transmission of this information may be via V1-AAnF 135.

At operation 412, H-AAnF 335 may respond to AF 231, similar to operation. Transmission of the response may be via V1-AAnF 135.

At operation 413, AF 213131 may determine whether encryption is needed for an application session. For example, if AKMA_ENC_KEY_REQUIRED flag is set, AF 131 may determine that encryption is needed for the data. If AKMA_ENC_KEY_REQUIRED flag is not set, AF 231 may determine that encryption is not needed. Furthermore, if the registered SN ID included in the response of operation 312 is the same as SN ID of VPLMN 1, AF 131 may determine that, for example in case encryption is required by AKMA_ENC_KEY_REQUIRED flag, the application encryption key (e.g. derived from K_{AF}) is to be delivered V1-AAnF 135 of the same visitor network. However, if encryption is not needed, AF 131 may determine not to provide an application encryption key to V1-AAnF 135, thereby resulting in providing no encryption for the application data.

As another example, which may or may not be combined with use of the AKMA_ENC_KEY_REQUIRED flag, if the registered SN ID indicated by H-AAnF 33 (e.g. via V1-AAnF 135) is the same as the SN ID of PLMN in which AF 131 is located/connected (e.g. VPLMN 1), AF 131 may decide:
- to support pushing (or push) encryption keys to an AAnF of the same network (V1-AAnF 135) based on the registered SN ID and provide the encryption keys to V1-AAnF. V1-AAnF 135 may store the encryption keys related to UE 110, which may be used by LI if required,
- not to enable the encryption and continue with the UE session with integrity protection, or
- not to provide the service to UE 110 attached to other PLMN and reject the request.

Presence and use of AKMA_ENC_KEY_REQUIRED flag may be however optional and AF 131 may determine to provide encryption key(s) to the relevant AAnF based on the registered SN ID.

At operation, 414 AF 131 may transmit an application session establishment response to UE 110, for example to indicate successful establishment of the application session requested at operation 310. Alternatively, may reject the application session establishment request and transmit an indication of the rejection to UE 110.

At 415, AF 131 may provide the application encryption key (ENC key) to V1-AAnF 135 of the same VPLMN.

At operation 416, V1-AAnF 135 may update the AKMA context based on the application encryption key (ENC key) received at operation 415, e.g. store the application encryption key. Application data may be subsequently encrypted with this key. Upon a request, V2-AAnF 235 may provide the stored application encryption key (e.g. to another device), for example for intercepting the application session (e.g. in case of lawful interception).

Example embodiments of the present disclosure may address LI requirements where, if UE session (UA*) is encrypted, then encryption keys may be delivered to the relevant VPLMN. An AAnF may be deployed in VPLMN and HPLMN. VPLMN AAnF may forward the request (e.g. application session establishment request) to another the AAnF (e.g. AAnF of the HPLMN). H-AAnF 335 may receive the registered SN ID from AUSF 333 and forward the registered SN ID to AF (131 or 231) or AAnF (135 or 235) of the relevant VPLMN.

AUSF 333 may provide registered SN ID to H-AAnF 335. An AF may receive registered SN ID from H-AAnF 335 and provide the encryption keys to (or within) the relevant VPLMN. A NEF may receive registered SN ID from H-AAnF 335 and forward the encryption keys to the relevant VPLMN.

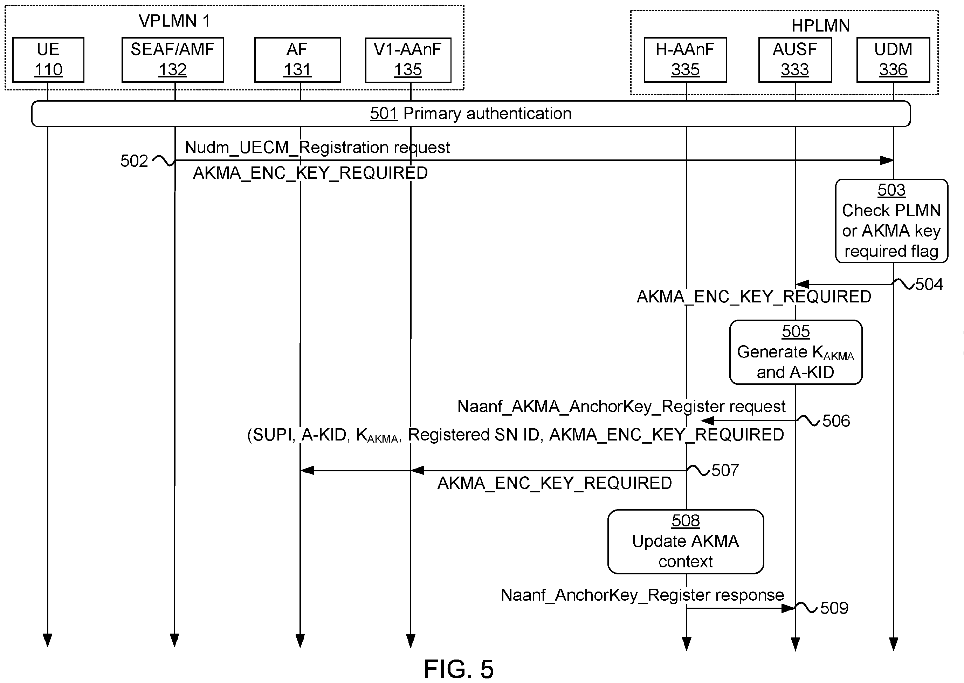

FIG. 5 illustrate an example of a message sequence and operations for authentication with support for lawful interception. Examples of FIG. 5 may be combined with examples of FIG. 3AB or FIG. 4AB.

At operation 501, primary authentication may be performed, for example similar to operation 304. Alternatively, following operations may be applied in case of mobility from EPS (enhanced packet core) to 5GS

At operation 502, SEAF/AMF 132 may transmit a registration request to UDM 336. The registration request may be associated with UE 110. The registration request may include the AKMA_ENC_KEY_REQUIRED flag. For example, the AMF may register with UDM 336 and provides the AKMA_ENC_KEY_REQUIRED flag to UDM 336.

At operation 503, UDM 336 may check PLMN and/or AKMA_ENC_KEY_REQUIRED flag. UDM 336 may for example compare value of the received AKMA_ENC_KEY_REQUIRED flag to a value stored, for example during authentication (e.g. at operation 501). If the values are different, UDM 336 may update AUSF 333 with the updated value at operation 504. Transmission of the AKMA_ENC_KEY _REQUIRED flag to AUSF 333 at operation 504 may be conditioned on at least one of the serving (visitor) PLMN of UE 110 or the AKMA_ENC_KEY_REQUIRED flag being different from previously stored information.

At operation 505, AUSF 333 may generate K_{AKMA} and A-KID, similar to operation 306.

At operation 506, the HPLMN (e.g. H-AAnF 335) may transmit an indication of SUPI, A-KID, *K*_{AKMA}, registered SN ID, and/or AKMA ENC KEY REQUIRED. This information may be transmitted for example in an Naanf_AKMA _ApplicationKey_Get response. As in operation 307, the response may comprise the AKMA_ENC_KEY_REQUIRED flag.

At operation 507, H-AAnF 335 may transmit the AKMA_LI_SUPPORT FLAG to VPLMN 1, for example AF 131, for example via V1-AAnF 135.

At operation 508, H-AAnF 335 may update the AKMA context (of UE 110) based on the information received at operation 506.

At operation 509, H-AAnF 135 may transmit an anchor key register response (e.g. Naanf_AnchorKey_Register response) to AUSF 333.

Subsequently, the procedure may continue as described with reference to FIG. 3B and FIG. 4B, continuing for example from the application session establishment request of operation 310 or 410.

Hence, in the example of FIG. 5, primary authentication may be completed in case of 5GS or this example may be applicable for the case of mobility from EPS to 5GS. An AMF of a VPLMN may register with an UDM of a HPLMN, provide the AKMA_ENC_KEY_REQUIRED flag to the UDM, and receive a response from the UDM. The UDM may check if received PLMN (registered PLMN of an associated UE) is different than the PLMN authenticated (registered SN ID stored in authentication data) or if the AKMA_ENC_KEY_REQUIRED flag has changed. If yes, the UDM may push the updated value of AKMA ENC KEY REQUIRED flag to an AUSF of the HPLMN. During AKMA context update, an AAnF of the HPLMN may update the AF of the VPLMN with the updated value of AKMA_ENC_KEY_REQUIRED flag. This improves LI support in case of roaming.

As an alternative example of providing LI support, the AMF may not provide the AKMA_ENC_KEY_REQUIRED flag to the HPLMN. Based on operator configuration, the HPLMN may be configured to indicate the SN name (of UE 110) to AF 131. AF 131 may be configured to push the encryption key to (AAnF of) the relevant VPLMN. If AF 131 is not able to push the encryption key to the relevant VPLMN, AF 13 may stop encryption of the associated application data.

Even though provision of a particular parameters is illustrated in FIG. 3AB and FIG. 4AB, it is appreciated that the system may be configured to use a subset of the illustrated parameters. For example, delivery of the encryption key to V1-AAnF 135 1 may be based on the information about the registered SN ID of UE 110 (e.g. without the AKMA_ENC_KEY_REQUIRED flag), delivered to AF 131 or 231 for example by AUSF 333 and H-AAnF 335.

When delivery of the encryption key to V1-AAnF 135 is conditioned upon the AKMA_ENC_KEY_REQUIRED flag, the following example embodiments may be applied:
According to aspect "A", an apparatus may comprise: at least one processor; and at least one memory storing instructions that, when executed by the at least one processor, cause the apparatus at least to: receive an authentication request from a first visitor public land mobile network (PLMN) of a device, wherein the authentication request comprises an indication of a requirement to use an application encryption key for an application session of the device, wherein the apparatus is located at a home PLMN of the device; and cause forwarding of the indication of the requirement to use the application encryption key for the application session of the device to an application function of the first visitor PLMN or a second visitor PLMN configured to control encryption of the application session.

According to an example embodiment of aspect "A", the device is served by the first visitor PLMN.

According to an example embodiment of aspect "A", the authentication request further comprises an identifier of the device and/or a name or an identifier of the first visitor PLMN.

According to an example embodiment of aspect "A", the authentication request is received from a security anchor function of the first visitor PLMN.

According to an example embodiment of aspect "A", the instructions, when executed by the at least one processor, further cause the apparatus to: forward the indication of the requirement to use the application encryption key for the application session of the device to a user data management function of the home PLMN.

According to an example embodiment of aspect "A", the instructions, when executed by the at least one processor, further cause the apparatus to: transmit, to an authentication and key management for applications (AKMA) anchor function of the home PLMN of the device, at least one of: an identifier of the device, authentication and key management for applications (AKMA) key material, or a serving network identifier of the first visitor PLMN.

According to an example embodiment of aspect "A", the apparatus is configured to operate as an authentication server function of the home PLMN of the device.

According to aspect "B", an apparatus may comprise: at least one processor; and at least one memory storing instructions that, when executed by the at least one processor, cause the apparatus at least to: receive, from an authentication server function of a home public land mobile network (PLMN) of a device, an indication of a requirement to use an application encryption key for an application session of the device, wherein the apparatus is located at the home PLMN of the device; forward the indication of the requirement to use the application encryption key for the application session of the device to an application function of a first visitor PLMN or a second visitor PLMN, wherein the application function is configured to control encryption of the application session.

According to an example embodiment of aspect "B", the device is served by the first visitor PLMN.

According to an example embodiment of aspect "B", the instructions, when executed by the at least one processor, further cause the apparatus to: receive, from the authentication server function of the home PLMN of the device, at least one of: an identifier of the device, authentication and key management for applications (AKMA) key material, or a serving network identifier of the first visitor PLMN.

According to an example embodiment of aspect "B", the instructions, when executed by the at least one processor, further cause the apparatus to: transmit, to the application function of the visitor PLMN, at least one of: an identifier of the device, authentication and key management for applications (AKMA) key material, a serving network identifier of the visitor PLMN.

According to an example embodiment of aspect "C", an apparatus, may comprise: at least one processor; an at least one memory storing instructions that, when executed by the at least one processor, cause the apparatus at least to: receive, from a home public land mobile network (PLMN) of a device, an indication of a requirement to use an application encryption key for an application session of the device, wherein the apparatus is located at a first visitor PLMN or a second visitor PLMN of the device; receive, from the home public land mobile network (PLMN) of the device, a serving network identifier associated with the device and indicative of the first visitor PLMN; and transmit an application encryption key to an application security function of the first visitor PLMN based on the serving network identifier, in response to the requirement to use the application encryption key for the application session of the device.

According to an example embodiment of aspect "C", apparatus the application security function comprises an authentication and key management for applications (AKMA) anchor function of the first visitor PLMN.

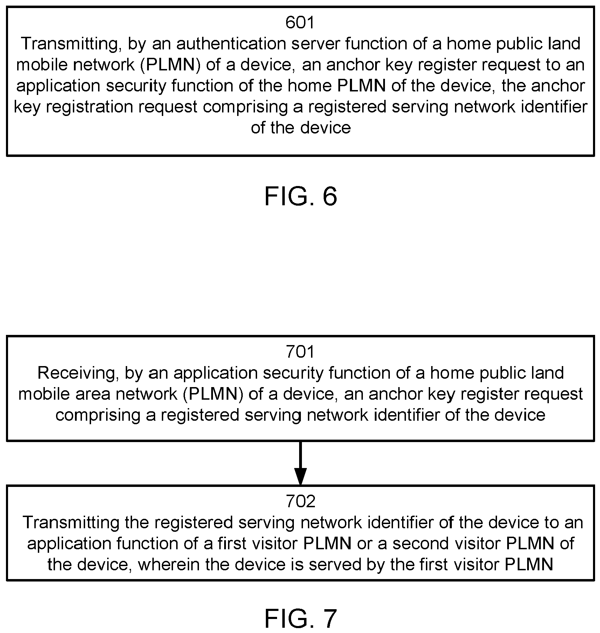

FIG.6 illustrates an example of a method for authentication and key management at a home network.

At 601, the method may comprise transmitting, by an authentication server function of a home public land mobile network (PLMN) of a device, an anchor key register request to an application security function of the home PLMN of the device, the anchor key registration request comprising a registered serving network identifier of the device.

FIG.7 illustrates another example of a method for authentication and key management at a home network; and

At 701, the method may comprise receiving, by an application security function of a home public land mobile area network (PLMN) of a device, an anchor key register request comprising a registered serving network identifier of the device.

At 702, the method may comprise transmitting the registered serving network identifier of the device to an application function of a first visitor PLMN or a second visitor PLMN of the device.

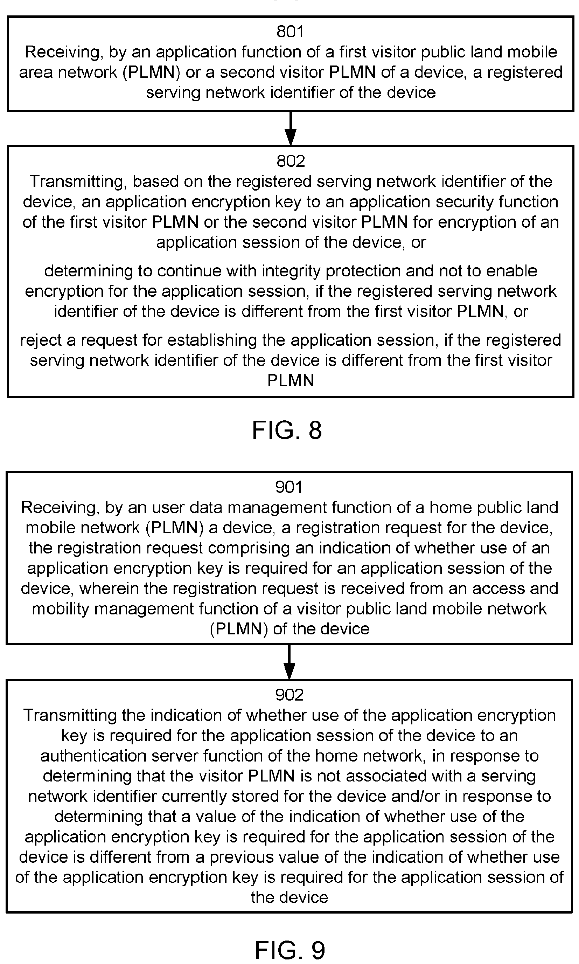

FIG.8 illustrates another example of a method for authentication and key management at a visitor network.

At 801, the method may comprise receiving, by an application function of a first visitor public land mobile area network (PLMN) or a second visitor PLMN of a device, a registered serving network identifier of the device.

At 802, the method may comprise transmitting, based on the registered serving network identifier of the device, an application encryption key to an application security function of the first visitor PLMN or the second visitor PLMN for encryption of an application session of the device, determining to continue with integrity protection and not to enable encryption for the application session, if the registered serving network identifier of the device is different from the first visitor PLMN, or reject a request for establishing the application session, if the registered serving network identifier of the device is different from the first visitor PLMN.

FIG.9 illustrates another example of a method for authentication and key management at a home network.

At 901, the method may comprise receiving, by an user data management function of a home public land mobile network (PLMN) a device, a registration request for the device, the registration request comprising an indication of whether use of an application encryption key is required for an application session of the device, wherein the registration request is received from an access and mobility management function of a visitor public land mobile network (PLMN) of the device.

At 902, the method may comprise transmitting the indication of whether use of the application encryption key is required for the application session of the device to an authentication server function of the home network, in response to determining that the visitor PLMN is not associated with a serving network identifier currently stored for the device and/or in response to determining that a value of the indication of whether use of the application encryption key is required for the application session of the device is different from a previous value of the indication of whether use of the application encryption key is required for the application session of the device.

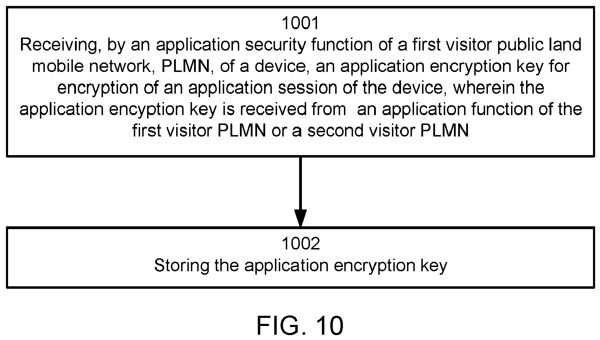

FIG. 10 illustrates another example of a method for authentication and key management at a visitor network.

At 1001, the method may comprise: receiving, by an application security function of a first visitor public land mobile network, PLMN, of a device, an application encryption key for encryption of an application session of the device, wherein the application encryption key is received from an application function of the first visitor PLMN or a second visitor PLMN

At 1002, the method may comprise storing the application encryption key.

Further features of the methods directly result from the functionality of the network functions described throughout the description, claims, and drawings, and are therefore not repeated here. An apparatus, such as for example a network device configured to implement one or more network functions, may be configured to perform or cause performance of any aspect of the method(s) described herein. Further, a computer program or a computer program product may comprise instructions for causing, when executed, a device to perform any aspect of the method(s) described herein. Further, a device may comprise means for performing any aspect of the method(s) described herein. According to an example embodiment, the means comprises at least one processor, and memory including program code, the at least one processor, and program code configured to, when executed by the at least one processor, cause the device to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

The expression "at least one of A or B" in this document means A, or B, or both A and B.

## Claims

1. An apparatus, comprising:
at least one processor; and
at least one memory including computer program code;
the at least one memory and the computer program code configured to, with the at least one processor, cause the apparatus at least to:
transmit, by an authentication server function of a home public land mobile network, PLMN, of a device, an anchor key register request to an application security function of the home PLMN of the device, the anchor key registration request comprising a registered serving network identifier of the device.

2. The apparatus according to claim 1, wherein the apparatus is further configured to:
receive an authentication request from a first visitor PLMN of the device, wherein the authentication request comprises an indication of a requirement to use an application encryption key for an application session of the device, or receive the indication of the requirement to use the application encryption key for the application session of the device from a data repository function of the home PLMN; and
cause forwarding of the indication of the requirement to use the application encryption key for the application session of the device to an application function of the first visitor PLMN or a second visitor PLMN, wherein the application function of the first visitor PLMN or the second visitor PLMN is configured to control encryption of the application session.

3. The apparatus according to claim 1 or 2, wherein the device is served by the first visitor PLMN.

4. The apparatus according to any of claims 1 to 3, wherein the authentication request further comprises an identifier of the device and/or a name or an identifier of the first visitor PLMN.

5. The apparatus according to any of claims 1 to 4, wherein the authentication request is received from a security anchor function of the first visitor PLMN.

6. An apparatus, comprising:
at least one processor; and
at least one memory including computer program code;
the at least one memory and the computer program code configured to, with the at least one processor, cause the apparatus at least to:
receive, by an application security function of a home public land mobile area network, PLMN, of a device, an anchor key register request comprising a registered serving network identifier of the device; and
transmit the registered serving network identifier of the device to an application function of a first visitor PLMN or a second visitor PLMN of the device, wherein the device is served by the first visitor PLMN.

7. The apparatus according to claim 6, wherein the anchor key register request comprises an indication of a requirement to use an application encryption key for an application session of the device, and wherein the apparatus is further configured to:
forward the indication of the requirement to use the application encryption key for the application session of the device to the application function of the first visitor PLMN or the second visitor PLMN, wherein the application function is configured to control encryption of the application session.

8. The apparatus according to claim 6 or 7, wherein the registered serving network identifier is transmitted in an application key get response.

9. The apparatus according to any of claims 6 to 8, wherein the registered serving network identifier is indicative of the first visitor PLMN.

10. An apparatus, comprising:
at least one processor; and
at least one memory including computer program code;
the at least one memory and the computer program code configured to, with the at least one processor, cause the apparatus at least to:
receive, by an application function of a first visitor public land mobile area network, PLMN, or a second visitor PLMN of a device, a registered serving network identifier of the device indicative of the first visitor PLMN; and
transmit, based on the registered serving network identifier of the device, an application encryption key to an application security function of the first visitor PLMN for encryption of an application session of the device,
determine to continue with integrity protection and not to enable encryption for the application session, if the registered serving network identifier of the device is different from the first visitor PLMN, or
reject a request for establishing the application session, if the registered serving network identifier of the device is different from the first visitor PLMN

11. The apparatus according to claim 10, wherein the apparatus if further configured to:
receive an indication of a requirement to use an application encryption key for an application session of the device; and
transmit the application encryption key to an application security function of the first visitor PLMN based on the serving network identifier, in response to the requirement to use the application encryption key for the application session of the device.

12. A method, comprising:
transmitting, by an authentication server function of a home public land mobile network, PLMN, of a device, an anchor key register request to an application security function of the home PLMN of the device, the anchor key registration request comprising a registered serving network identifier of the device.

13. A method comprising:
receiving, by an application security function of a home public land mobile area network, PLMN, of a device, an anchor key register request comprising a registered serving network identifier of the device; and
transmitting the registered serving network identifier of the device to an application function of a first visitor PLMN or a second visitor PLMN of the device wherein the device is served by the first visitor PLMN.

14. A method comprising:
receiving, by an application function of a first visitor public land mobile area network, PLMN, or a second visitor PLMN of a device, a registered serving network identifier of the device; and
transmitting, based on the registered serving network identifier of the device, an application encryption key to an application security function of the first visitor PLMN or the second visitor PLMN for encryption of an application session of the device,
determining to continue with integrity protection and not to enable encryption for the application session, if the registered serving network identifier of the device is different from the first visitor PLMN, or
reject a request for establishing the application session, if the registered serving network identifier of the device is different from the first visitor PLMN.

15. A computer readable medium comprising program instructions stored thereon for performing a method according to any of claims 12 to 14.
